# EUROPEAN PATENT SPECIFICATION

(11) **EP 1 134 244 B1**
(45) Date of publication and mention of the grant of the patent: **11.04.2012**
(21) Application number: 01106144.7
(22) Date of filing: 13.03.2001
(51) Int. Cl.: C08G 18/62, C09D 175/04

(54) **Adhesives**
Klebstoffe
Adhésifs

(30) Priority: 17.03.2000 JP 2000077047; 07.11.2000 JP 2000339640; 06.02.2001 JP 2001029525
(43) Date of publication of application: 19.09.2001
(73) Proprietor: YAMAHA CORPORATION, Hamamatsu-shi Shizuoka-ken (JP)
(72) Inventor: Iwata, Ritsuo, c/o Yamaha Corporation, Naka-ku, Hamamatsu-shi, Shizuoka-ken (JP); Nagashima, Hironao, c/o Yamaha Corporation, Naka-ku, Hamamatsu-shi, Shizuoka-ken (JP); Ogata, Tomohide, c/o Yamaha Corporation, Naka-ku, Hamamatsu-shi, Shizuoka-ken (JP); Suzuki, Kazunari, c/o Yamaha Corporation, Naka-ku, Hamamatsu-shi, Shizuoka-ken (JP); Nakajima, Koji, c/o Yamaha Corporation, Naka-ku, Hamamatsu-shi, Shizuoka-ken (JP)
(74) Representative: Geyer, Ulrich F.

(56) References cited:
- EP-A- 0 367 120
- EP-A1- 0 699 697
- JP-A- 2000 226 562
- JP-A- 2001 049 224
- PATENT ABSTRACTS OF JAPAN vol. 008, no. 283 (C-258), 25 December 1984 (1984-12-25) & JP 59 152974 A (DAINIPPON INK KAGAKU KOGYO KK), 31 August 1984 (1984-08-31)
- PATENT ABSTRACTS OF JAPAN vol. 007, no. 083 (C-160), 6 April 1983 (1983-04-06) & JP 58 011576 A (EIDAI SANGYO KK), 22 January 1983 (1983-01-22)

## Description

The present invention relates to adhesives for wood materials for use in bonding wood materials, the adhesives being high in initial bond strength at room temperature and excellent in durability after application, and to prevent generation of volatile organic compounds such as formaldehyde.

### Description of the Related Art

As adhesives for woodwork, various adhesives such as urea resin based adhesives, melamine resin based adhesives, phenol resin based adhesives, resorcinol resin based adhesives, water based polymer-isocyanate adhesives, α-olefin based adhesives, and acetic acid vinyl emulsion based adhesives have heretofore been known.

However, use of such adhesives for woodwork is accompanied with various problems as described below. Urea resin based adhesives, melamine resin based adhesives, phenol resin based adhesives, resorcinol resin based adhesives and the like have a problem that a harmful substance such as formaldehyde could be generated during working or from the product. Water based polymer-isocyanate adhesives are relatively expensive, highly viscous and hence poor in workability, poor in initial bond strength, and easily foam.

α-Olefin based adhesives are relatively expensive and poor in adhesive strength at high temperatures. Polyvinyl acetate emulsion based adhesives are poor in water resistance and heat resistance.

JP 59 152974 A discloses a decorative laminate pasted with paper. The decorative laminate is obtained by bonding paper to a substrate with an adhesive prepared by blending PVA and vinyl acetate polymer emulsion with a specific isocyanate compound and a curing agent. Paper is bonded to a substrate such as plywood, etc. with an adhesive prepared by blending a main agent consisting essentially of a PVA having preferably 88-99mol saponification degree and 1,600-2,400 polymerization degree and a vinyl acetate polymer emulsion with a curing agent containing an isocyanate compound (e.g. diphenylmethane diisocyanate, etc.) having two or more isocyanate groups in the molecule, and, if necessary, the top coating is carried out, to give the desired decorative tape. The blending ratio of the PVA and the vinyl acetate polymer emulsion is (5:95)-(40:60), and the amount of the isocyanate compound blended is preferably 5-50 % by weight based on 100 % by weight solid material of the main agent.

As described above, the conventional adhesives for wood materials are excellent in one respect but poor in another respect. Few of them can satisfy the required properties within a wide range.

### Summary pf the Invention

An object of the present invention is to provide an adhesive that quickly develops initial bond strength at room temperature without generating volatile harmful substances, has good heat resistance and water resistance and good durability, and is excellent in workability and less prone to foaming.

The above object can be achieved by an adhesive, as defined in claim 1. Preferred embodiments of the present invention may be gathered from the dependent claims. Accordingly, the adhesive of the present invention can be used widely for bonding of wood materials including not only hard wood materials having a specific gravity of 0.6 or more, such as beech, oak, birch, maple, walnut, matoa, nato, and teak but also general wood and wood materials such as plywood, particleboard, MDF, and OSB.

### DETAILED DESCRIPTION OF THE INVENTION

Hereinafter, the present invention will be described in detail.

As the polymeric MDI (Methylene Diphenyl Diisocyanate) (A), which serves as a main ingredient of the adhesive of the present invention, one having an isocyanate group content of from 28% to 35% and a viscosity of from 100 to 250 mPa·s (25°C) is used.

As the modified polyvinyl acetate emulsion (B), modified polyvinyl acetate emulsion containing active functional group synthesized by emulsion polymerization are used. Those having a resin content of from 40% to 65% and a viscosity of from 1, 000 to 120, 000 mPa·s (25°C) are preferable. Also, those that are free of plasticizers are preferred.

The modified polyvinyl acetate emulsion (B) is added to increase room temperature initial bond strength, water resistance, and room temperature bond strength.

As the aqueous polyvinyl alcohol solution (C), a 10% by mass aqueous solution of partially saponified polyvinyl acetate is used and the degree of saponification is preferably from 85 to 92 mol%. This is used to adjust the initial bond strength and viscosity of the adhesive.

The filler (D) plays a role of preventing foaming and adjusting the viscosity. As the filler (D), rice husk (chaff) is used, in the form of a powder.

Since the powder of rice husk is used as the filler (D), it is easy to cut the resulting wood products whose members are bonded with the adhesive and with less damage to edge of the cutting machine. The powder of rice husk is less detrimental to the working environment than a powder of inorganic materials. Further, a standard of management of the powder of rice husk is low relatively. If necessary, a mildew resistant agent may be used with the powder of rice husk.

For the purpose of increasing the initial bond strength, the adhesive of the present invention may contain in addition to the above blended components, adhesive mass such as styrene butadiene rubber (SBR) emulsion, natural rubber (NR) emulsion, chloroprene rubber (CR) emulsion, acrylic emulsion, EVA emulsion, or a viscosity increasing agent, also called a tackifier, such as rosin, hydrogenated rosin, coumarone resin, terpene resin, ester gum. The bond strength may be increased by blending a silane coupling agent to increase interaction between the filler, an inorganic component, and any other organic component.

The equivalent ratio of the above blended components (B+C)/A is preferably from 30 to 120, more preferably from 45 to 100. The equivalent ratio as used herein is calculated as described below.

The NCO equivalent number is calculated as follows. First the mass of polymeric MDI is multiplied by the NCO content (%) of polymeric MDI, the product is divided by 100 to obtain an NCO amount, and this is divided by NCO equivalent (42) to obtain an NCO equivalent number.

On the other hand, total amount of water contained in the modified polyvinyl acetate emulsion (B) and the aqueous polyvinyl alcohol solution (C) is obtained in the same manner as above. Since one molecule of water reacts with two NCO groups, the equivalent of water is 18/2=9. Dividing the total amount of water by the equivalent of water, 9, an OH equivalent number is obtained.

The OH equivalent number thus obtained further divided by the NCO equivalent number is an equivalent ratio.

If the equivalent ratio is less than 30, the room temperature bond strength is insufficient and also the initial bond strength is insufficient. If it exceeds 120, the viscosity becomes too high, the foaminess is high, and the heat resistance is decreased. The equivalent ratio is more preferably from 46 to 100. By setting the equivalent ratio (B+C)/A to from 46 to 100, the initial bond strength ("the initial 40 minutes"), which is defined as a value of compressive shear strength for the initial 40 minutes after press bonding at 22°C and 60% RH, can be made 50×0.1 MPa or more(JIS K6852(1994)).

The blending ratio of the above-described blended components in terms of mass ratio is preferably polymeric MDI (A) :modified polyvinyl acetate emulsion (B) :aqueous polyvinyl alcohol solution (C) : filler (D)=30: (60-160) : (50-160):(10-140).

When the powder of rice husk is used as the filler (D), the blending ratio is preferably 30:(60-160):(60-160) :(10 - 40) . By setting the blending ratio to the above range the initial bond strength can be made 50×0.1 MPa or more.

If the blending amount of the modified polyvinyl acetate emulsion (B) is less than 60, the initial bond strength, water resistance, and room temperature bond strength are insufficient, while if it exceeds 160, water resistance and heat resistance are decreased.

If the blending amount of 10% by mass aqueous polyvinyl alcohol solution (C) is less than 50, the viscosity is increased, the workability is decreased, and the pot life is shortened. If it exceeds 160, the water resistance and heat resistance are decreased.

Further, if the blending amount of the filler (D) is less than 10, no sufficient foaming inhibitory power can be obtained so that heat resistance increasing effect cannot be obtained. If it exceeds 140, the viscosity is increased and the workability is decreased.

The adhesive of the present invention can be obtained by weighing the above-described respective blended components by predetermined amounts, and mixing and stirring them. The product contains water and is in the form of an aqueous paste. The viscosity of the composition is within the range from 1000 to 60,000 mPa · s (25°C), preferably from 1000 to 45,000 mPa · s (25°C). The pot life is 25 minutes or more, preferably 60 minutes or more. It is preferred that the blending ratio be set such that these conditions can be satisfied.

If the viscosity of the composition is less than 1000 mPa·s (25°C), the adhesive prone to soak into the wood materials and the bond strength is lowered.

The adhesive is cured by the reaction between the isocyanate groups in the polymeric MDI (A) and the moisture and other hydroxyl groups contained in the modified polyvinyl acetate emulsion (B) and the aqueous polyvinyl alcohol solution (C) to develop bond strength.

Such an adhesive quickly develops adhesiveness at room temperature so that sufficient bond strength can be obtained in a short time after press bonding. It produces less foam when mixing, stirring and bonding, has appropriate viscosity, and can be used for a long time, so that it has a good workability. Furthermore, it has high bond strength as well as high heat resistance and water resistance, so that it is excellent in durability.

Since the adhesive contains no formaldehyde condensation polymerized resin such as urea resin, phenol resin, melamine resin, or resorcinol resin, which is a source of formaldehyde, there is no risk that volatile harmful substances such as formaldehyde will be released from the product after bonding.

The adhesive of the present invention is excellent in various properties such as "Standard atmosphere", "Water resistance at 60°C", "Temperature resistance at 100°C", "The initial 40 minutes", and viscosity. In particular, if the equivalent ratio of components A:(B+C) is set to 1:(30-120), the adhesive exhibits the following bonding properties as will be apparent from the specific examples described hereinbelow.

| | |
|---|---|
| "Standard atmosphere": | 130×0.1 MPa or more |
| "Water resistance at 60°C": | 40×0.1 MPa or more |
| "Temperature resistance at 100°C": | 90×01 MPa or more |
| "The Initial 40 minutes": | 50×0.1 MPa or more |
| Viscosity | 1, 000∼60, 000 mPa·s |

"Standard atmosphere" indicates values obtained by leaving test pieces to stand for 72 hours or more after press bonding them at 22°C and 60% RH for 2 hours and measuring them as they are after the standing.

"Water Resistance at 60°C" indicates values obtained by dipping test pieces, which were left to stand at 22°C and 60% RH for 72 hours or more after the press bonding, in water at 60°C for 3 hours and then taking out and measuring the bond strength at room temperature (22°C).

"Temperature resistance at 100°C" indicates values obtained by leaving test pieces, which were left to stand at 22°C and 60% RH for 72 hours or more after the press bonding, to stand in an oven at 100°C for 24 hours and measuring at a measuring temperature of 100°C.

"The initial 40 minutes" indicates values of compressive shear strength for the initial 40 minutes after press bonding at 22°C and 60% RH.

Accordingly, the adhesive of the present invention can be used widely for bonding wood materials such as wood, ply wood, particleboard, MDF (Medium Density Fiber board), and OSB (Oriented Strand Board). In particular, it can be used for lamination of hard wood materials having a specific gravity of 0.6 or more such as beech, oak, birch, maple, walnut, matoa, nato, and teak, lamination, decorative application, assembly of parts of wood products such as musical instruments, adhesion of wood materials and another materials such as plastics, metals, glasses, ceramics.

The wood products of the present invention include various wood products bonded with the above-described adhesive, for example, musical instruments, furniture, construction materials, and have high mechanical strength at the bonded parts and high durability.

### Embodiments

Hereinafter, the present invention will be described in more detail by examples. However, the present invention should not be construed as being limited thereto.

26 types of adhesives having blending compositions (mass ratios) shown in Tables 1 to 4 were prepared and bonding tests were carried out using birch as an adherend.

As the polymeric MDI, the one prepared by Sumitomo Bayer Urethane Co., Ltd. was used. As the aqueous polyvinyl alcohol solution, 10% by mass solution of the one prepared by Unitika Corporation was used.

As the filler, ground granulated blast furnace slag (Esument Super 6000, average particle diameter: 8 µm, produced by Shin Nittetsu Chubu Esument Co., Ltd.), silica (Sibelite M3000, purity 99%, average particle diameter: 12 µm, produced by Sibelco Co., Ltd.), and according to the present invention, rice husk (SARON fiber AA type 200 mesh under, produced by SARON FILER LTD.) was used.

The bonding was performed by pressing under the conditions of coating amount of 190∼200 g/m², temperature of 22∼23°C, humidity of 55∼60% RH, pressure of 5∼7kg/cm² for 2 hours.

The tests were performed in accordance with JIS K6852 (1994) "Testing methods for shear strength of adhesive bonds by compression loading". Also, the pot life and viscosity of the adhesives after the mixing and stirring were measured.

The results of tests are shown in Table 5 and 6.

The present invention is represented by Tables 4 and 6.

**Table 1 Comparative Examples**

| | Test Example 1 | Test Example 2 | Test Example 3 | Test Example 4 | Test Example 5 |
|---|---|---|---|---|---|
| (A)Polymeric MDI | 30 | 30 | 30 | 30 | 30 |
| (B)Modified polyvinyl emulsion | 60 | 70 | 100 | 140 | 100 |
| (C)PVA 10% | 50 | 50 | 50 | 50 | 100 |
| (D)Ground granulated furnace slag | 80 | 50 | 120 | 120 | 100 |
| SBR Emulsion | 0 | 0 | 36 | 18 | 0 |
| Equivalent ratio | 36.94 | 39.41 | 46.80 | 56.65 | 68.96 |

**Table 2 Comparative Examples**

| | Test Example 6 | Test Example 7 | Test Example 8 | Test Example 9 | Test Example 10 | Test Example 11 |
|---|---|---|---|---|---|---|
| (A)Polymeric MDI | 30 | 30 | 30 | 30 | 30 | 30 |
| (B)Modified polyvinyl emulsion | 140 | 100 | 150 | 150 | 30 | 200 |
| (C)PVA 10% | 100 | 150 | 140 | 160 | 30 | 180 |
| (D)Ground granulated furnace slag | 80 | 80 | 130 | 130 | 30 | 100 |
| SBR Emulsion | 36 | 18 | 0 | 0 | 0 | 0 |
| Equivalent ratio | 78.81 | 91.13 | 99.01 | 107.88 | 20.69 | 129.06 |

**Table 3 Comparative Examples**

| | Test Example 12 | Test Example 13 | Test Example 14 | Test Example 15 | Test Example 16 | Test Example 17 | Test Example 18 |
|---|---|---|---|---|---|---|---|
| (A)Polymeric MDI | 30 | 30 | 30 | 30 | 30 | 30 | 30 |
| (B)Modified polyvinyl emulsion | 60 | 100 | 100 | 100 | 150 | 30 | 200 |
| (C)PVA 10% | 50 | 50 | 100 | 150 | 160 | 30 | 180 |
| (D)Silica | 80 | 120 | 100 | 80 | 130 | 30 | 100 |
| *Silane coupling agent | 0.1 | 0.1 | 0.1 | 0.1 | 0.1 | 0.1 | 0.1 |
| Equivalent ratio | 36.94 | 46.80 | 68.96 | 91.13 | 107.88 | 20.69 | 129.06 |

| | | | | | | | |
|---|---|---|---|---|---|---|---|
| *In Table 3, the amount of silane coupling agent is based on silica. | | | | | | | |

**Table 4 Examples in accordance with the present invention**

| | Test Example 19 | Test Example 20 | Test Example 21 | Test Example 22 | Test Example 23 | Test Example 24 | Test Example 25 | Test C Example 26 |
|---|---|---|---|---|---|---|---|---|
| (A) Polymeric MDI | 30 | 30 | 30 | 30 | 30 | 30 | 30 | 30 |
| (B)Modified polyvinyl emulsion | 84 | 78 | 64 | 100 | 156 | 145 | 101 | 126 |
| (C)PVA 10% | 67 | 93 | 113 | 100 | 85 | 100 | 155 | 155 |
| (D)Rice husk | 12 | 26 | 22 | 20 | 18 | 33 | 25 | 25 |
| Equivalent ratio | 50.32 | 60.40 | 65.80 | 68.96 | 76.11 | 80.08 | 93.25 | 99.44 |

**Table 5 Comparative Examples**

| | Basic Adhesion Properties | | | | Workability | |
|---|---|---|---|---|---|---|
| | Shear Strength of Adhesive Bonds by Compression Loading (×0.1MPa) | | | | Viscosity | Pot Life |
| | Standard atmosphere | Water Resistance at 60°C | Temperature resistance at 100°C | Initial 40 minutes | mPa·s (25°C) | Minutes (25°C) |
| Standard Value | 130 or more | 40 or more | 90 or more | 50 or more | Less than 60,000 | 25 or more |
| Test Example 1 | 139 | 52 | 127 | 50 | 58,000 | 60 |
| Test Example 2 | 148 | 67 | 155 | 56 | 31,000 | 60 |
| Test Example 3 | 148 | 48 | 113 | 82 | 48,000 | 60 |
| Test Example 4 | 147 | 43 | 105 | 86 | 45,000 | 60 |
| Test Example 5 | 157 | 53 | 124 | 93 | 25,500 | 60 |
| Test Example 6 | 145 | 46 | 108 | 88 | 18,500 | 60 |
| Test Example 7 | 141 | 42 | 102 | 85 | 12,000 | 60 |
| Test Example 8 | 158 | 43 | 128 | 99 | 39,000 | 60 |
| Test Example 9 | 148 | 43 | 98 | 74 | 35,000 | 60 |
| Test Example 10 | 74 | 84 | 136 | 16 | 21,500 | 60 |
| Test Example 11 | 152 | 28 | 88 | 76 | 66,000 | 60 |
| Test Example 12 | 135 | 56 | 137 | 50 | 54,000 | 60 |
| Test Example 13 | 144 | 50 | 111 | 81 | 46,000 | 60 |
| Test Example 14 | 146 | 55 | 135 | 93 | 20,000 | 60 |
| Test Example 15 | 139 | 41 | 104 | 86 | 11,000 | 60 |
| Test Example 16 | 148 | 42 | 121 | 78 | 33,000 | 60 |
| Test Example 17 | 78 | 75 | 139 | 17 | 17,500 | 60 |
| Test Example 18 | 152 | 23 | 74 | 81 | 63,000 | 60 |
| Resorcinol | 172 | 103 | 131 | 0 | 1,500 | 30 |
| Urea | 143 | 86 | 127 | 0 | 3,000 | 30 |
| Aqueous polymer Isocyanate | 169 | 86 | 99 | 38 | 30,000 | 60 |
| α-Olefin | 158 | 32 | 65 | 55 | 45,000 | 90 |

**Table 6 Examples in accordance with the present invention**

| | Basic Adhesion Properties | | | | Workability | |
|---|---|---|---|---|---|---|
| | Shear Strength of Adhesive Bonds by Compression Loading (×0.1MPa) | | | | Viscosity | Pot Life |
| | Standard atmosphere | Water Resistance at 60°C | Temperature resistance at 100°C | Initial 40 minutes | mPa·s (25°C) | Minutes (25°C) |
| Standard Value | 130 or more | 40 or more | 90 or more | 50 or more | Less than 60,000 | 25 or more |
| Test Example 19 | 131 | 57 | 93 | 52 | 6,000 | 60 |
| Test Example 20 | 134 | 45 | 99 | 52 | 11,500 | 60 |
| Test Example 21 | 136 | 68 | 115 | 51 | 40,000 | 60 |
| Test Example 22 | 146 | 44 | 92 | 66 | 21,500 | 60 |
| Test Example 23 | 143 | 49 | 91 | 54 | 12,000 | 60 |
| Test Example 24 | 161 | 43 | 94 | 57 | 32,500 | 60 |
| Test Example 25 | 132 | 45 | 91 | 55 | 18,750 | 60 |
| Test Example 26 | 135 | 45 | 107 | 54 | 30,000 | 60 |

In Tables 5 and 6, the meanings of "Water Resistance at 60°C", "Temperature resistance at 100°C", "The initial 40 minutes" and "Standard atmosphere" are mentioned above.

"Pot Life" indicates where adhesion properties are satisfied, at the maximum time that has passed after stirring.

Table 5 also shows the results of measurement on four conventional adhesives for wood materials for comparison.

From Table 5 and 6, it can be seen that among the adhesives of the test examples, those of Test Examples 4, 5, 6, 13, 14, 15 and 22 exhibit excellent properties.

Using the adhesive of Test Example 3 described above, a laminated wood was fabricated. Beechwoods of 100 mm in width, 600 mm in length and 25 mm in thickness were provided. An adhesive was coated on them in an amount of 200 g/m² for each adhesive layer and 8 beechwoods were superposed and press bonded under a load of 1.5 MPa at room temperature (22°C) and 60% RH for 2 hours and then left to stand for 7 days. The resulting laminated wood was subjected to hot-cold cycle testing (by repeating 10 times the heat cycle of -20°C for 16 hours and +50°C for 8 hours) and to dry-wet cycle testing (repeating twice the cycle of 35°C, 95% RH for 2 days and 35°C, 20% RH for 5 days) . As a result, no separation of adhesive was observed so that lamination wood having good durability was obtained.

## Claims

1. An adhesive, comprising (A) a polymeric MDI, (B) modified polyvinyl acetate emulsion, (C) aqueous polyvinyl alcohol solution, and (D) rice husk as a filler, wherein the filler (D) is a powder of rise husk.

2. An adhesive according to claim 1, wherein an equivalent ratio of A: (B+C) is from 1:30 to 1:120.

3. An adhesive according to claim 1, wherein a mass ratio of A:B:C:D is 30:(60-160) : (50-160) :(10-140) provided that the aqueous polyvinyl alcohol solution (C) is in a concentration of 10% by mass.

4. An adhesive according to claim 1, wherein a mass ratio of A:B:C:D is 30:(60-160):(60-160):(10-40) provided that the aqueous polyvinyl alcohol solution (C) is in a concentration of 10% by mass.

5. Wood products whose members are bonded with an adhesive according to any of the preceding claims.

## Patentansprüche

1. Ein Klebstoff, der folgendes aufweist:
(A) ein polymerisches Methylendiphenyldüsocyanat (MDI),
(B) eine modifizierte Polyvinylazetat-Emulsion;
(C) eine wässrige Polyvinyl-Alkohol-Lösung; und
(D) Reishülsen als ein Füllstoff, wobei der Füllstoff (D) ein Pulver aus Reishülsen ist.

2. Klebstoff nach Anspruch 1, wobei ein Äquivalenzverhältnis von A : (B+C) von 1 : 30 bis 1 : 120 ist.

3. Klebstoff nach Anspruch 1, wobei ein Masseverhältnis von A : B : C : D 30 : (60-160) : (50-160) : (10-140) ist, vorausgesetzt die wässrige Polyvinyl-Alkohol-Lösung (C) besitzt eine Konzentration von 10 % auf die Masse bezogen.

4. Klebstoff nach Anspruch 1, wobei ein Masseverhältnis von A : B : C : D 30 : (60-160) : (60-160) : (10-40) ist, vorausgesetzt die wässrige Polyvinyl-Alkohol-Lösung (C) besitzt eine Konzentration von 10 % auf die Masse bezogen.

5. Holzprodukte, deren Teile verbunden sind mittels eines Klebstoffs nach einem der vorhergehenden Ansprüche.

## Revendications

1. Adhésif comprenant (A) un MDI polymère, (B) une émulsion d'acétate de polyvinyle modifiée, (C) une solution aqueuse d'alcool polyvinylique, et (D) de l'enveloppe de riz en tant que matériau de remplissage, le matériau de remplissage (D) étant une poudre d'enveloppe de riz.

2. Adhésif selon la revendication 1, dans lequel le rapport équivalent de A :(B+C) est compris entre 1:30 et 1:120.

3. Adhésif selon la revendication 1, dans lequel le rapport de masse de A:B:C:D est de 30:(60-160):(50-160):(10-140) pourvu que la solution aqueuse d'alcool polyvinylique (C) ait une concentration de 10 % en masse.

4. Adhésif selon la revendication 1, dans lequel le rapport de masse de A:B:C:D est de 30:(60-160):(60-160):(10-40) pourvu que la solution aqueuse d'alcool polyvinylique (C) ait une concentration de 10 % en masse.

5. Produits en bois dont les éléments sont collés par un adhésif selon l'une quelconque des revendications précédentes.
